Europäisches Patentamt

European Patent Office

Office européen des brevets

(19)

(11) Publication number: **0 206 754 B1**

# EUROPEAN PATENT SPECIFICATION

(45) Date of publication of patent specification: **13.03.91**　(51) Int. Cl.⁵: **F16H 49/00**

(21) Application number: **86304693.4**

(22) Date of filing: **18.06.86**

(54) Strain wave gearing.

(30) Priority: **24.06.85 US 748169**

(43) Date of publication of application:
**30.12.86 Bulletin 86/52**

(45) Publication of the grant of the patent:
**13.03.91 Bulletin 91/11**

(84) Designated Contracting States:
**BE CH DE FR GB IT LI NL SE**

(56) References cited:
**EP-A- 0 130 032**
**DE-A- 3 222 117**
**FR-A- 2 468 797**
**US-A- 3 161 082**

(73) Proprietor: **Quincy Technologies, Inc.**
**446 Blake Street**
**New Haven Connecticut 06515(US)**

(72) Inventor: **Carlson, John H.**
**15 Bradley Road**
**Danvers Massachusetts 01923(US)**

(74) Representative: **Warren, Anthony Robert et al**
**BARON & WARREN, 18 South End, Kensington**
**London W8 5BU(GB)**

# Description

This invention relates to strain wave gearing, and more particularly to strain wave gearing assemblies of the type employing tubular flexsplines or strain gears.

As originally disclosed in US-A- 2,906,143 to Musser, a circumferential wave of radial deflection in a gearing element termed a flexspline or strain gear is rotated for progressive reaction with a rigid circular spline or ring gear. The deflection is produced by a wave generator, for instance a multi-lobed cam concentric with the spline members, a double eccentric wave generator of the type shown in US-A- 4,491,033 to Carlson et al, a fluid pressure operated system, or otherwise. The rotating shape imparted to the flexspline is commonly ellipsoidal, its spline teeth engaging with the circular spline at major axis localities and being out of engagement at minor axis localities.

A strain wave gearing assembly exhibiting a "soft" wind-up, i.e. inherently having considerable circumferential lag or hysteresis in its flexspline in response to change in torque load is shown, for example, in US-A- 3,161,082 to Musser. The flexspline, in effect, attempts to wrap itself around the wave generator unless appropriate support is provided to minimize rotational shifting of the unsupported cylindrical portion of the flexspline due to distortion of the wave shape.

Several efforts at maintaining flexspline wave shape have been made. One approach seeking to increase stability and accuracy of positioning motion, especially important, for instance in driving mechanisms for robots, is shown in the US-A- 4,491,033 referred to above. It controls circumferential shifting of the flexspline bulge or "wind-up", there imposed by a double eccentric wave generator, by means of a rigid circular disc concentric with the axis of rotation, the disc being of the size of the minor axis of the flexspline and arranged to contact its bore at a locality spaced from the wave generator. As there illustrated, the disc is of fixed diameter and axially disposed adjacent to an open end of a tubular flexspline.

Another approach to reducing wind-up in a flexspline is disclosed in EP-A-130032, which teaches modification of the flexspline configuration, its open end being radially enlarged in thickness as it extends axially away from the flexspline teeth.

An object of this invention is to provide improved torsional compliance and reduced hysteresis in the flexspline or strain gear of a strain wave gearing assembly. To this end, the present invention provides a strain wave gearing assembly as defined in claim 1.

As will be apparent from the following description of the several different illustrative embodiments, the torsional stiffness enhancer ring is radially deflectable for resiliently bearing against the flexspline bore along its minor axis in opposition to strain in the flexspline imparted by a wave generator. The control ring (or rings) enhances the torsional stiffness in a strain wave gearing assembly by exerting a radially outward force along the minor axis of the flexspline bore which maintains the clearance between the flexspline bore and outside of the wave generator, i.e. commonly the outside diameter of an outer race of the wave generator. Maintaining this clearance in this way minimizes distortion of the deflection wave in the flexspline and hence greatly diminishes wind-up therein around nul torque.

Various embodiments of the present invention will now be described in conjunction with the accompanying drawings, in which:-

Figure 1 is a diagrammatic end view of concentric elements of a strain wave gearing assembly including its enhancer ring, but prior to insertion of a wave generator;

Figure 2 is a view similar to Figure 1, but with a (diagrammatic) wave generator imposing a major axis in a flexspline and orthogonally related minor axis in the enhancer ring and the flexspline;

Figure 3 is an axial section of a typical two-lobe strain wave gearing assembly taken in the plane of the minor axis of its flexspline, and showing a single enhancer ring behind a wave generator ellipsoidal plug and bearing race and retained by a closed end of the flexspline;

Figure 4 is an axial section similar to Figure 3, the single enhancer ring now being retained by a lubricating cartridge.

Figure 5 is a sectional view similar to Figure 4. but with the enhancer ring mounted ahead of the wave generator;

Figure 6 is a sectional view similar to Figures 4 and 5, one enhancer ring being ahead of the wave generator and one being behind it;

Figure 7 is a partly exploded view of the assembly shown in Figure 6, a portion of the non-deflected flexspline being broken away to disclose internal parts.

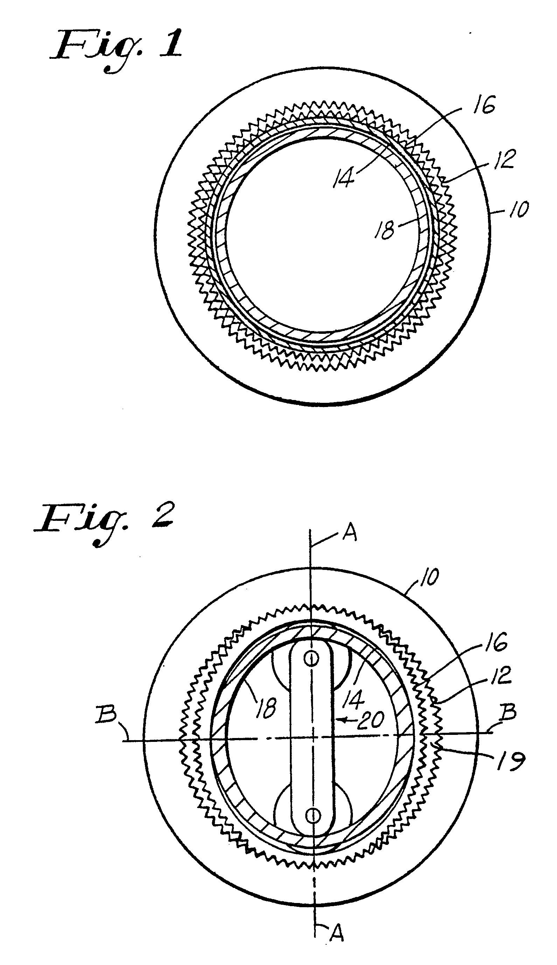

Figure 1 is a transverse view diagrammatically showing concentrically related strain wave gearing elements in the undeflected state, clearance being exaggerated and a wave generator omitted. A rigid circular spline or ring gear 10 having internal teeth 12 axially receives an initially circular flexspline or strain gear 14 formed with external teeth 16. Within the flexspline is an initially circular radially deflectable torsional stiffness enhancer ring 18 having an outside diameter which has minimal clearance with the bore of the undeflected flexspline. The ring 18 or its equivalent may be axially disposed ahead of and/or behind the flexspline teeth 16 as illustrated in other views hereinafter referred to, but preferably adjacent thereto, for the purpose of enhancing the torsional stiffness of the harmonic drive unit by maintaining the operating wave shape within the flexspline as next explained.

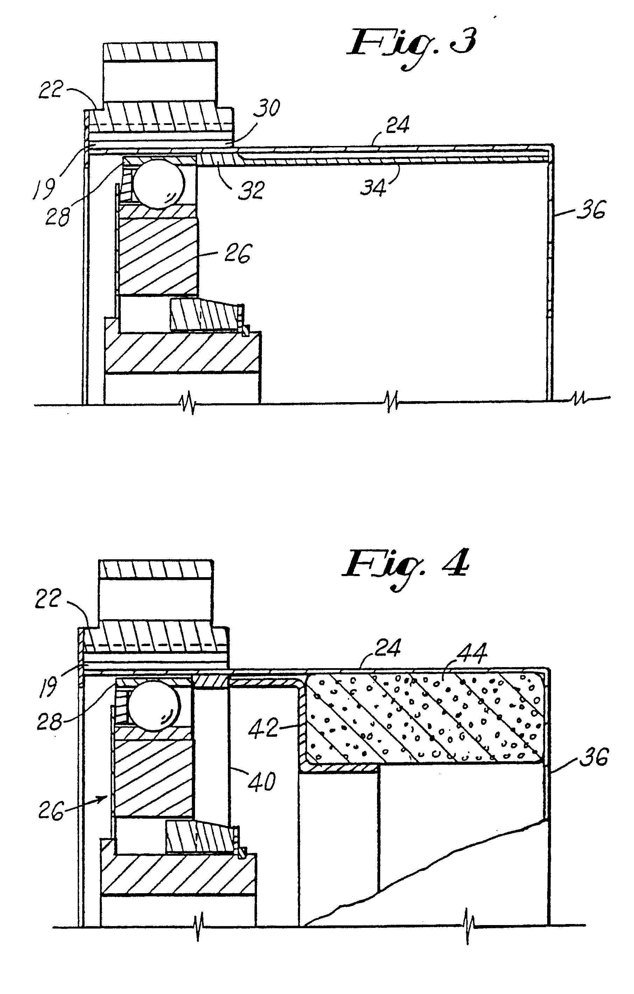

The torsional stiffness enhancer ring 18 is of a high modulus material, e.g. steel, and of a diameter selected to adequately and resiliently oppose a radially inwardly directed force exerted by the flexspline 14 along the minor axis B (so that the teeth of the flexspline are spaced from the internal teeth of the ring gear in a second region of the flexspline) when the flexspline is outwardly deflected along its major axis A (Figure 2) by contacts with a wave generator 20, for instance one of the 2-lobe type there shown, so that the teeth of the flexspline engage with the teeth of the ring gear in a first region of the flexspline. It will be understood that the invention, though having particular advantage in ellipsoidal shape embodiments, is not necessarily limited thereto. The mean diameter of the wave generator 20 (and others herein shown) is slightly smaller than the bore of the flexspline. When the wave generator is assembled into the flexspline bore, the generator exerts a force along the major axis eliminating all radial clearance between the flexspline 14 and the spline 10. The clearance increases as distance from the major axis increases until, at the minor axis, the clearance (19) is a maximum and twice the mean average clearance.

When torque is applied to the output member, normally the strain gear or flexspline in each of the embodiments, it "wraps around" the wave generator. As a consequence the clearance between the flexspline bore and the wave generator decreases in two diametrically opposed quadrants between axes A and B, and in the other opposed quadrants such clearance is increased. This change in clearance causes a distortion of the wave shape which produces a rotational shift in the flexspline along its minor axis thereby increasing torsional wind-up in the unit.

As indicated above, when the resilient torsional stiffness enhancer or control ring 18 has a distorted shape imposed on it by the strain gear 14, the ring exerts a radially outward force against the wall of the flexspline bore along the minor axis. This force tends to maintain the clearance (19) between the flexspline and the wave generator along the minor axis thereby minimising the tendency to distort the wave shape and hence decreasing the torsional wind-up, and hysteresis.

Referring now to Figure 3, a relatively stationary circular spline or ring gear 22 coaxially receives a tubular cup-shaped flexspline or strain gear 24 within which a rotary wave generator generally designated 26 is mounted. An external thin ball race 28 pressed on an ellipsoidal plug of the generator is disposed to impart an ellipsoidal wave shape to spline teeth 30 of the flexspline to effect meshing at spaced localities with splines of the circular spline 22. A radially deflectable shape torsional stiffness enhancer or control ring 32 in back of (i.e. inboard of) the race 28 has a thinner elongated cylindrical portion 34 abutting and retained by a diaphragm or closed end portion 36 of the flexspline, the ring thus being constrained to bear resiliently outward on the flexspline bore along its minor axis and immediately adjacent to the race 28. A hub of the wave generator is adapted to be secured to an input shaft (not shown), and an output shaft (not shown) is secured to the diaphragm 36.

Figure 4, like Figure 3, shows a single shape torsional stiffness enhancer or control ring 40 in the flexspline 24 and in back of the wave generator assembly 26, the ring now being held against the race 28 by a retainer 42 arranged to confine a cellular lubricating cartridge 44 against the diaphragm 36. The latter may be of annular shape and is impregnated with lubricant. The arrangement is such that rotation of the flexspline wave shape, and more particularly the coning action, provides a gentle squeezing pressure on the cartridge to release and suitably feed the lubricant during operation.

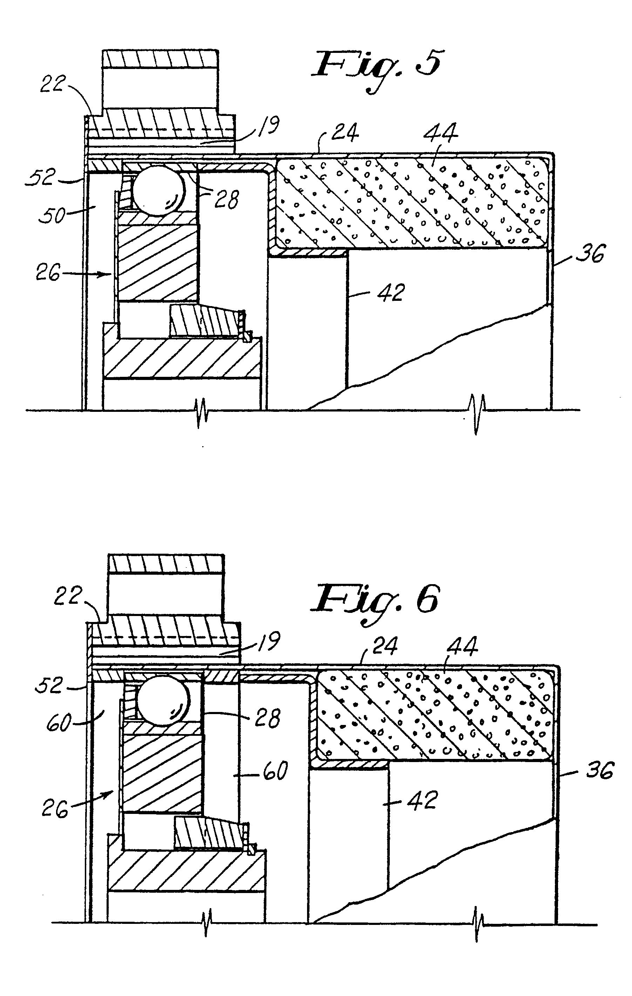

Figure 5 is similar to Figure 4, but shows a single torsional stiffness enhancer or control ring 50 disposed in the flexspline 24 ahead of (i.e. outboard of) the wave generator race 28. It is to be understood that, whether inboard or outboard, the term "control ring" as used herein is intended to include any radially resilient element or assemblage of elements of generally annular arrangement but not necessarily having a continuous peripheral surface. Thus, for example, a series of radially deflectable fingers, coaxially disposed, may constitute a shape control ring though not contiguously arranged. A circular retainer designated 52 (Figure 5) and secured to the circular spline 22 holds the outer ring 50 within the flexspline mouth but free to rotate about the longitudinal axis.

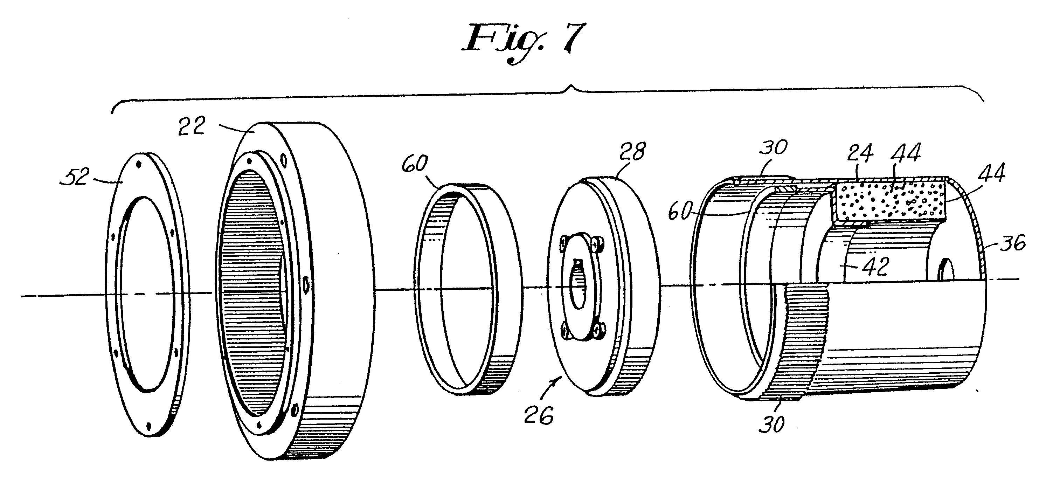

Figures 6 and 7 show an embodiment wherein a pair of torsional stiffness enhancer or control rings 60, 60 is provided, one on each side of the wave generator race 28. The rings 60 coact to enhance flexspline torsional stiffness and maintain the wave shape.

From the foregoing, it will be appreciated that the control ring(s) serve to increase resistance in the flexspline to circumferential distortion and reduce hysteresis. The enhanced flexspline stiffness assures improved precision also in angular output positioning. The invention, moreover, enables attainment of these benefits by mere addition of a resilient ring or rings to existing strain wave gearing assemblies currently in use. Although the invention is believed to be of particular advantage with two-lobe type strain wave gearing, it is not limited thereto. Furthermore, although only the type of strain wave gearing employing an internal wave generator is herein illustrated with a relatively stationary circular spline, the invention has application to other known arrangements of strain wave gearing.

## Claims

1. A strain wave gearing assembly comprising a ring gear (10, 22) having internal axially extending teeth, a strain gear (16, 24) having external axially extending teeth, the number of strain gear teeth being different than the number of ring gear teeth and a wave generator (20, 26) located within said strain gear including

   means for distorting said strain gear from a cylindrical form whereby the teeth of said strain gear, in at least a first region of the distorted strain gear engage with ring gear teeth and the teeth of said strain gear in another second region of the distorted strain gear are spaced from the internal teeth of said ring gear,

   characterized in that the assembly comprises a torsional stiffness enhancer ring (18, 32, 40, 50, 60, 62) which is cylindrical and has an outside diameter smaller than the bore of the undeflected cylindrical strain gear (16, 24), which ring is engaged by the strain gear when the strain gear is distorted at the second region of the distorted strain gear and is spaced from the strain gear when the strain gear is distorted at the first region of the distorted strain gear, the ring thus being distorted and resisting distortion of the strain gear.

2. A strain wave gearing assembly according to claim 1 characterised in that the strain gear is distorted into an elliptical form and the first region is adjacent the major axis (A-A) of the ellipse and the second region is adjacent the minor axis (B-B) of the ellipse.

3. A strain wave gearing assembly according to claim 1 characterized in that it comprises two enhancer rings (60,60) one on either side of the wave generator (26).

## Revendications

1. Ensemble formant engrenage à onde de déformation comprenant une couronne (10, 22) ayant des dents s'étendant axialement vers l'intérieur, un engrenage de déformation (16, 24) ayant des dents s'étendant axialement vers l'extérieur, le nombre de dents de l'engrenage de déformation étant différent du nombre de dents de la couronne, et un générateur d'ondes (20, 26) situé dans l'engrenage de déformation, comportant des moyens pour déformer l'engrenage de déformation à partir d'une forme cylindrique grâce à quoi les dents de l'engrenage de déformation, dans au moins une première région de l'engrenage de déformation déformé engrènent avec les dents de la couronne et les dents de l'engrenage de déformation dans une seconde région de l'engrenage de déformation déformé sont espacées des dents internes de la couronne, caractérisé en ce que l'ensemble comporte un anneau de renforcement de la rigidité en torsion (18, 32, 40, 50, 60, 62) qui est cylindrique et possède un diamètre extérieur plus petit que l'alésage de l'engrenage de déformation (16, 24) cylindrique non déformé, l'anneau étant en contact avec la seconde région de l'engrenage de déformation lorsque l'engrenage de déformation est déformé et est éloigné de la première région de l'engrenage de déformation déformé lorsque l'engrenage de déformation est déformé, l'anneau étant ainsi déformé et présentant une résistance à la déformation de l'engrenage de déformation.

2. Ensemble formant engrenage à onde de déformation selon la revendication 1, caractérisé en ce que l'engrenage de déformation est déformé en forme d'ellipse et la première région est adjacente au grand axe (A-A) de l'ellipse et la seconde région est adjacente au petit axe (B-B) de l'ellipse.

3. Assemblage formant engrenage à onde de déformation selon la revendication 1, caractérisé en ce qu'il comporte deux anneaux de renforcement (60, 60) situés de chaque côté du générateur d'onde (26).

## Ansprüche

1. Spannungswellengetriebe, umfassend ein Hohlrad (10,22) mit inneren, axial verlaufenden Zähnen, ein verformbares Rad (16,24) mit äußeren axial verlaufenden Zähnen, wobei die Anzahl der Zähne des verformbaren Rades sich von der der Zähne des Hohlrades unterscheidet sowie einen Wellenerzeuger (20,26), der innerhalb des verformbaren Rades angeordnet ist und Mittel zur Verformung desselben aus einer zylindrischen Gestalt heraus aufweist, wobei die Zähne des verformbaren Rades in mindestens einem ersten Bereich desselben mit den Zähnen des Hohlrades in Eingriff kommen, und die Zähne des verformbaren Rades in einem zweiten Bereich desselben von den inneren Zähnen des Hohlrades beabstandet sind, dadurch gekennzeichnet, daß das Getriebe einen die Torsionssteifigkeit erhöhenden Ring (18,32,40,50,60,62) aufweist, der zylindrisch ist und einen Außendurchmesser aufweist, der kleiner ist als die Bohrung des verformbaren, unverformten zylindrischen Rades (16,24), und der mit dem verformbaren Rad zusammenwirkt, wenn diesem in dem zweiten Bereich deformiert wird und der von dem verformbaren Rad beabstandet ist, wenn dieses im ersten Bereich desselben deformiert wird, wodurch der Ring deformiert wird und so der Verformung des verformbaren Rades Widerstand leistet.

2. Spannungswellengetriebe nach Anspruch 1, dadurch gekennzeichnet, daß das verformbare Rad in eine elliptische Gestalt verformt wird und der erste Bereich der größeren Achse (a-a) der Ellipse und der zweite Bereich der kleineren Achse (b-b) der Ellipse benachbart ist.

3. Spannungswellengetriebe nach Anspruch 1, dadurch gekennzeichnet, daß es zwei, die Steifigkeit erhöhende Ringe (60,60) und zwar einen an jeder Seite des Wellenerzeugers (26) umfaßt.

*Fig. 1*

*Fig. 2*

Fig. 3

Fig. 4

*Fig. 5*

*Fig. 6*

*Fig. 7*

EP 0 206 754 B1